# EUROPEAN PATENT APPLICATION

(11) **EP 3 950 836 A1**
(43) Date of publication of application: **09.02.2022**
(21) Application number: 20782734.6
(22) Date of filing: 03.04.2020
(51) Int. Cl.: C08L 67/00, C08L 101/02, C08L 101/14

(54) **RESIN COMPOSITION**

(30) Priority: 05.04.2019 JP 2019072641
(71) Applicant: Kao Corporation, Chuo-ku Tokyo 103-8210 (JP)
(72) Inventor: YOSHIMURA,Tadanori, Wakayama-shi, Wakayama 640-8580 (JP)
(74) Representative: Hoffmann Eitle
(86) International application number: PCT/JP2020/015320
(87) International publication number: WO 2020/204164

(57) **Abstract**

The resin composition of the present invention includes a water-soluble resin (component A); a resin having a functional group capable of reacting or interacting with the component A (component B); and at least one selected from the group consisting of a monovalent inorganic salt and a polycyclic aromatic sulfonate (component C). According to the resin composition of the present invention, a resin composition whose physical properties before recycling can be reproduced even after recycling can be provided.

## Description

### TECHNICAL FIELD

The present invention relates to a resin composition.

### BACKGROUND ART

In recent years, due to increase in environmental awareness, waste reduction, recycling and the like of products have been demanded. For polymer materials, though use of biodegradable polymers can be considered as one means for waste reduction, biodegradable polymer materials are limited, application examples thereof are few, and the contribution to waste reduction is small.

Meanwhile, water-soluble polymers are used as dispersants, aqueous coating materials and the like, and can be dissolved or dispersed in water after use. Thus, these materials can be relatively easily removed by being brought into contact with water. When a waste liquid containing the water-soluble polymers flows out into the environment, biodegradability of the water-soluble polymers is required. However, water-soluble polymers are further limited, and the spread of biodegradable water-soluble polymers is not sufficient.

In view of such a current situation, when a resin composition containing water-soluble polymers dissolved or dispersed in water can be recovered, release into the environment is suppressed. As a method for recovering such a resin composition from water, a method has been proposed in which a water-soluble polymer or the like dissolved in an aqueous solution is deposited and precipitated by adding a salt or the like to the aqueous solution to recover the resin composition (for example, JP-A-2016-215109, JP-T-2017-509508, and JP-T-2008-539326).

### SUMMARY OF THE INVENTION

The present invention is a resin composition including a water-soluble resin (component A); a resin having a functional group capable of reacting or interacting with the component A (component B); and at least one selected from the group consisting of a monovalent inorganic salt and a polycyclic aromatic sulfonate (component C).

### MODE FOR CARRYING OUT THE INVENTION

When a recovered resin composition cannot be reused, the resin composition needs to be disposed by incineration or the like, and a load on the environment still occurs.

Though recovery and recycling of a resin composition are promoted from the viewpoint of reusing the resin composition, reproduction of the physical properties before recycling is difficult because the resin composition after recovery has a morphology different from that of the resin composition before use.

The present invention provides a resin composition whose physical properties before recycling can be reproduced even after recycling.

The present invention is a resin composition including a water-soluble resin (component A); a resin having a functional group capable of reacting or interacting with the component A (component B); and at least one selected from the group consisting of a monovalent inorganic salt and a polycyclic aromatic sulfonate (component C).

According to the present invention, a resin composition whose morphology before recycling can be reproduced even after recycling can be provided.

One embodiment according to the present invention is explained below.

### <Resin composition>

The resin composition of the present embodiment includes a water-soluble resin (component A); a resin having a functional group capable of reacting or interacting with the component A (component B); and at least one selected from the group consisting of a monovalent inorganic salt and a polycyclic aromatic sulfonate (component C). According to the resin composition of the present embodiment, the morphology before recycling can be reproduced even after recycling, deterioration of physical properties such as mechanical strength after recycling can be suppressed, and heat resistance can be improved. The reason why the resin composition exhibits such an effect is not clear, but is presumed as follows.

When the resin composition containing the component A and the component B is treated with water, the component A and the component C are dissolved in neutral water. Though the component B is not dissolved in neutral water, the interface of the component B against water in which the component A is dissolved is stabilized due to the function of a functional group capable of reacting or interacting with the component A dissolved in neutral water, the component B does not aggregate, and a dispersed state can be maintained. Presumably, when the component C is added to such a system to precipitate a resin composition including the component A, the component B, and the component C, and the resin composition including the component A, the component B, and the component C is separated as a solid, the morphology of the resin composition including the component A and the component B is maintained before and after the recycling. Presumably due to this, deterioration of physical properties such as mechanical strength can be suppressed even after recycling, and heat resistance can be improved.

In the present specification, recycling means separating a solid containing a resin composition from a liquid in which the resin composition is dissolved or dispersed.

Examples of the neutral water include an aqueous solution having a pH of 6 to 8. Specific examples of the neutral water include deionized water, pure water, tap water, and industrial water, and deionized water or tap water is preferable from the viewpoint of availability. The neutral water can contain a water-soluble organic solvent as long as the resin composition formed after recycling is not damaged. Examples of the water-soluble organic solvent include lower alcohols such as methanol, ethanol, and 2-propanol, glycol ethers such as propylene glycol monomethyl ether, ethylene glycol monoethyl ether, ethylene glycol mono-tertiary butyl ether, and diethylene glycol monobutyl ether, and ketones such as acetone and methyl ethyl ketone.

### [Water-soluble resin (component A)]

The component A is not particularly limited as long as the component A is a resin that is dissolved in neutral water at 70°C or more in an amount of 5% by mass or more.

From the viewpoint of improving the heat resistance of the resin composition, the component A is preferably a resin having a hydrophilic group such as a hydroxyl group, a sulfonic acid group, a carboxyl group, and a phosphoric acid group other than the hydrophilic group that constitutes the polymerization related to the production of the water-soluble resin (hereinafter, also simply referred to as a hydrophilic group).

Examples of the component A include a water-soluble polyester resin, a water-soluble polyamide resin, a water-soluble polyimide resin, a water-soluble acrylic resin, a water-soluble polyurethane resin, a water-soluble polyallylamine resin, a water-soluble phenol resin, a water-soluble epoxy resin, a water-soluble phenoxy resin, a water-soluble urea resin, a water-soluble melamine resin, a polyvinyl alcohol resin, and modified products of these resins. These can be used singly or in combination of two or more types thereof. Among them, from the viewpoint of exhibiting the effects of the present invention, one or two selected from the group consisting of a water-soluble polyester resin and a water-soluble polyamide resin are preferable, and a water-soluble polyester resin is more preferable.

The weight average molecular weight of the component A is preferably 3,000 or more, more preferably 10,000 or more, still more preferably 13,000 or more, and still more preferably 15,000 or more from the viewpoint of reproducing the morphology of the resin composition before recycling, and preferably 70,000 or less, more preferably 50,000 or less, still more preferably 40,000 or less, and still more preferably 30,000 or less from the viewpoint of improving the solubility in neutral water of the resin composition and the viewpoint of reproducing the morphology of the resin composition before recycling. In the present specification, the weight average molecular weight is measured by the method described in Examples.

The content of the component A in the resin composition is preferably 50% by mass or more, more preferably 60% by mass or more, and still more preferably 65% by mass or more, and is preferably 95% by mass or less, more preferably 92% by mass or less, and still more preferably 90% by mass or less from the viewpoint of reproducing the morphology of the resin composition before recycling.

### [Water-soluble polyester resin]

Examples of the water-soluble polyester resin include a water-soluble polyester resin having a hydrophilic monomer unit a having the hydrophilic group, the hydrophobic dicarboxylic acid monomer unit b, and the diol monomer unit, and having a percentage of the hydrophilic monomer unit a based on the total of the hydrophilic monomer unit a and the hydrophobic dicarboxylic acid monomer unit b in the polyester resin of 10 to 70 mol%.

### (Hydrophilic monomer unit a)

The water-soluble polyester resin has a hydrophilic monomer unit a having a hydrophilic group. The hydrophilic monomer unit a is not particularly limited as long as the hydrophilic monomer unit a is a monomer unit having a hydrophilic group. The monomer from which the hydrophilic monomer unit a is derived is also referred to as a monomer a.

Examples of the hydrophilic group include at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group from the viewpoint of improving the solubility in neutral water of the resin composition and the viewpoint of ease of polymerization reaction during production of the water-soluble polyester resin. Among them, at least one selected from the group consisting of a quaternary ammonium base, an oxyalkylene group, a carboxylate group, a phosphate group, and a sulfonate group are preferable, at least one selected from the group consisting of a quaternary ammonium base, an oxyalkylene group, and a sulfonate group are more preferable, and a sulfonate group is still more preferable from the viewpoint of improving the heat resistance of the resin composition.

The sulfonate group is preferably a sulfonate group represented by -SO3M3 (M3 represents a counter ion of a sulfonic acid group that constitutes a sulfonate group, and from the viewpoint of improving the solubility in neutral water of the resin composition, M3 is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably at least one selected from the group consisting of a sodium ion and a potassium ion, and still more preferably a sodium ion.) from the viewpoint of improving the solubility in neutral water of the resin composition and the viewpoint of ease of polymerization reaction during production of the water-soluble polyester resin.

The monomer a is preferably at least one selected from the group consisting of carboxylic acids, amines, and amino acids, and more preferably carboxylic acids from the viewpoint of improving the solubility in neutral water and the moisture absorption resistance of the resin composition and the viewpoint of ease of polymerization reaction during production of the water-soluble polyester resin. Among the carboxylic acids, from the same viewpoints, aromatic carboxylic acids are preferable, and at least one selected from the group consisting of hydroxy group-containing aromatic dicarboxylic acids, primary amino group-containing aromatic dicarboxylic acids, sulfonic acid group-containing aromatic dicarboxylic acids, and sulfonate group-containing aromatic dicarboxylic acids are more preferable. Among them, from the same viewpoints, at least one selected from the group consisting of 5-hydroxyisophthalic acid, 5-aminoisophthalic acid, 5-sulfoisophthalic acid, 2-sulfoterephthalic acid, and 4-sulfo-2,6-naphthalenedicarboxylic acid are preferable, one or two selected from the group consisting of 5-sulfoisophthalic acid and 2-sulfoterephthalic acid are more preferable, and 5-sulfoisophthalic acid is still more preferable.

The content of the hydrophilic group in the water-soluble polyester resin is preferably 0.5 mmol/g or more, more preferably 0.6 mmol/g or more, and still more preferably 0.7 mmol/g or more from the viewpoint of improving the solubility in neutral water of the resin composition, and is preferably 3 mmol/g or less, more preferably 2 mmol/g or less, and still more preferably 1.5 mmol/g or less from the viewpoint of improving the moisture absorption resistance.

The percentage of the amount of substance of the hydrophilic monomer unit a based on the total amount of substance of all monomer units in the water-soluble polyester resin is preferably 1 mol% or more, more preferably 7 mol% or more, still more preferably 10 mol% or more, still more preferably 12 mol% or more from the viewpoint of improving the solubility in neutral water of the resin composition, and is preferably 45 mol% or less, more preferably 40 mol% or less, still more preferably 35 mol% or less from the viewpoint of improving the moisture absorption resistance. The percentage of the amount of substance of the hydrophilic monomer unit a based on the total amount of substance of all monomer units in the water-soluble polyester resin is preferably 1 to 45 mol%, more preferably 7 to 45 mol%, still more preferably 10 to 40 mol%, still more preferably 12 to 35 mol% from the viewpoint of improving the solubility in neutral water of the resin composition.

### (Hydrophobic dicarboxylic acid monomer unit b)

The water-soluble polyester resin has a hydrophobic dicarboxylic acid monomer unit b. The hydrophobic dicarboxylic acid monomer unit b does not have the hydrophilic group. In the present specification, the dicarboxylic acid from which the hydrophobic dicarboxylic acid monomer unit b is derived is also referred to as a dicarboxylic acid b.

The dicarboxylic acid b is preferably at least one selected from the group consisting of an aromatic dicarboxylic acid, an aliphatic dicarboxylic acid, and an alicyclic dicarboxylic acid, from the viewpoint of improving the solubility in neutral water and the moisture absorption resistance of the resin composition and the viewpoint of ease of polymerization reaction during production of the water-soluble polyester resin. Among them, from the same viewpoints, at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid are more preferable, at least one selected from the group consisting of terephthalic acid, 2,5-furandicarboxylic acid, and 2,6-naphthalenedicarboxylic acid are still more preferable, and 2,6-naphthalenedicarboxylic acid is still more preferable.

The percentage of the amount of substance of the hydrophobic dicarboxylic acid monomer unit b in the water-soluble polyester resin based on the total amount of substance of all monomer units in the water-soluble polyester resin is preferably 15 mol% or more, more preferably 25 mol% or more, and still more preferably 30 mol% or more from the viewpoint of improving the moisture absorption resistance of the resin composition, and is preferably 45 mol% or less, more preferably 42 mol% or less, still more preferably 40 mol% or less from the viewpoint of improving the solubility in neutral water of the resin composition. The percentage of the amount of substance of the hydrophobic dicarboxylic acid monomer unit b in the water-soluble polyester resin based on the total amount of substance of all monomer units in the water-soluble polyester resin is preferably 15 to 45 mol%, more preferably 25 to 42 mol%, still more preferably 30 to 40 mol% from the viewpoint of improving the solubility in neutral water and the moisture absorption resistance of the resin composition.

The molar ratio of the hydrophilic monomer unit a to the hydrophobic dicarboxylic acid monomer unit b in the water-soluble polyester resin (the hydrophilic monomer unit a/the hydrophobic dicarboxylic acid monomer unit b) is preferably 10/90 or more, more preferably 15/85 or more, still more preferably 18/82 or more, and still more preferably 20/80 or more from the viewpoint of improving the solubility in neutral water and the moisture absorption resistance of the resin composition, and preferably 70/30 or less, more preferably 65/35 or less, and still more preferably 60/40 or less from the same viewpoint.

### (Diol monomer unit c)

The water-soluble polyester resin has a diol monomer unit. The diol from which the diol monomer unit is derived is also referred to as a diol c.

As the diol c, an aliphatic diol, an aromatic diol and the like can be used, and an aliphatic diol is preferable from the viewpoint of the production cost of the water-soluble polyester resin.

The carbon number of the diol c is preferably 2 or more from the viewpoint of improving the solubility in neutral water and the moisture absorption resistance of the resin composition, and is preferably 31 or less, more preferably 25 or less, still more preferably 20 or less, still more preferably 15 or less from the same viewpoint.

Examples of the aliphatic diol include at least one selected from the group consisting of a chain diol and a cyclic diol.

The carbon number of the chain diol is preferably 2 or more from the viewpoint of improving the solubility in neutral water and the moisture absorption resistance of the resin composition, and is preferably 6 or less, more preferably 4 or less, still more preferably 3 or less, still more preferably 2 from the same viewpoint.

The diol c can have ether oxygen, when the diol c is a chain aliphatic diol, the number of ether oxygen is preferably 1 or less from the viewpoint of improving the solubility in neutral water and the moisture absorption resistance of the resin composition, and when the diol c is a cyclic aliphatic diol, the number of ether oxygen is preferably 2 or less from the same viewpoint.

The chain diol is preferably at least one selected from the group consisting of ethylene glycol, 1,2-propanediol, 1,3-propanediol, diethylene glycol, and dipropylene glycol, more preferably at least one selected from the group consisting of ethylene glycol, 1,2-propanediol, and 1,3-propanediol, and still more preferably ethylene glycol from the viewpoint of improving the solubility in neutral water and the moisture absorption resistance of the resin composition.

The carbon number of the cyclic diol is preferably 6 or more, more preferably 20 or more, still more preferably 25 or more from the viewpoint of improving the heat resistance and moisture absorption resistance of the resin composition, and is preferably 31 or less, and more preferably 30 or less from the viewpoint of improving the solubility in neutrality of the resin composition.

The cyclic diol is preferably at least one selected from the group consisting of aromatic diols, more preferably at least one selected from the group consisting of polycyclic aromatic diols, still more preferably at least one selected from the group consisting of fluorene derivatives, and still more preferably bisphenoxyethanolfluorene from the viewpoint of improving the solubility in neutral water and the moisture absorption resistance of the resin composition.

When the diol c contains at least one selected from the group consisting of ethylene glycol, 1,2-propanediol, 1,3-propanediol, diethylene glycol, and dipropylene glycol, the percentage of the total of monomer units derived from each of ethylene glycol, 1,2-propanediol, 1,3-propanediol, diethylene glycol, and dipropylene glycol based on the total of all diol monomer units in the water-soluble polyester resin is preferably 80 mol% or more, more preferably 90 mol% or more, still more preferably 95 mol% or more, still more preferably 98 mol% or more, still more preferably substantially 100 mol%, and still more preferably 100 mol% from the viewpoint of improving the solubility in neutral water and the moisture absorption resistance of the resin composition. Substantially 100 mol% means that a case where substances other than ethylene glycol, 1,2-propanediol, 1,3-propanediol, diethylene glycol, and dipropylene glycol are inevitably mixed is included.

When the diol c contains at least one selected from the group consisting of fluorene derivatives, the percentage of the total of monomer units derived from fluorene derivatives based on the total of all diol monomer units in the water-soluble polyester resin is preferably 10 mol% or more, more preferably 30 mol% or more, and still more preferably 40 mol% or more from the viewpoint of improving the heat resistance of the resin composition, and is preferably 90 mol% or less, more preferably 60 mol% or less, and still more preferably 50 mol% or less from the viewpoint of improving the solubility in neutral water of the resin composition.

The water-soluble polyester resin is preferably a water-soluble polyester resin α which has the percentage of the hydrophilic monomer unit a based on the total of all dicarboxylic acid monomer units including the hydrophilic monomer unit a of 10 to 90 mol% and the percentage of the dicarboxylic acid monomer unit b based on the total of all dicarboxylic acid monomer units including the hydrophilic monomer unit a of 10 to 90 mol%, and in which the dicarboxylic acid b for obtaining the dicarboxylic acid monomer unit b is 2,6-naphthalenedicarboxylic acid from the viewpoint of improving the solubility in neutral water and the moisture absorption resistance of the resin composition.

### <Water-soluble polyester resin α>

The percentage of the hydrophilic monomer unit a based on the total of all dicarboxylic acid monomer units including the hydrophilic monomer unit a in the water-soluble polyester resin α is preferably 10 mol% or more, more preferably 15 mol% or more, and still more preferably 20 mol% or more from the viewpoint of improving the solubility in neutral water and the moisture absorption resistance of the resin composition, and is preferably 90 mol% or less, more preferably 80 mol% or less, and still more preferably 70 mol% or less from the same viewpoint.

The percentage of the hydrophobic dicarboxylic acid monomer unit b based on the total of all dicarboxylic acid monomer units including the hydrophilic monomer unit a in the water-soluble polyester resin α is preferably 10 mol% or more, more preferably 20 mol% or more, and still more preferably 30 mol% or more from the viewpoint of improving the moisture absorption resistance of the resin composition, and is preferably 90 mol% or less, more preferably 85 mol% or less, and still more preferably 80 mol% or less from the viewpoint of improving the solubility in neutral water of the resin composition.

The monomer a in the water-soluble polyester resin α is preferably one or two selected from the group consisting of 5-sulfoisophthalic acid and 2-sulfoisophthalic acid, and more preferably 5-sulfoisophthalic acid from the viewpoint of improving the solubility in neutral water and the moisture absorption resistance of the resin composition.

The diol c in the water-soluble polyester resin α is preferably at least one selected from the group consisting of ethylene glycol, 1,2-propanediol, diethylene glycol, 1,3-propanediol, dipropylene glycol, 1,4-cyclohexanedimethanol, hydrogenated bisphenol A, isosorbide, bisphenoxyethanolfluorene, bisphenol fluorene, biscresoxyethanolfluorene, and biscresol fluorene, and more preferably one or two selected from the group consisting of ethylene glycol and bisphenoxyethanolfluorene from the viewpoint of improving the solubility in neutral water and the moisture absorption resistance of the resin composition.

The water-soluble polyester resin α can be exemplified by the following General Formula (1).

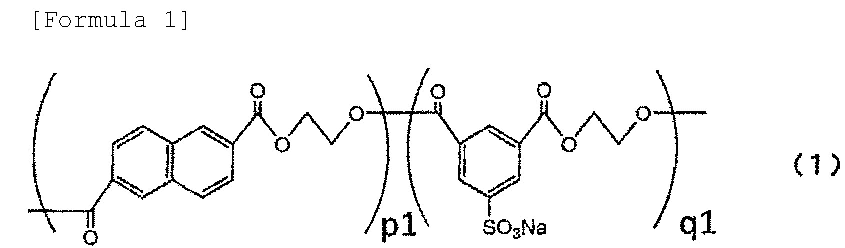

(In the Chemical Formula (1), p1 represents the number of the degree of polymerization of ethylene 2,6-naphthalenedicarboxylate, and q1 represents the number of the degree of polymerization of ethylene 5-sulfoisophthalate. The bond between ethylene 2,6-naphthalenedicarboxylate and ethylene 5-sulfoisophthalate is a block bond and/or a random bond, and a random bond is more preferable from the viewpoint of improving the solubility in neutral water of the resin composition.)

The water-soluble polyester resin can have monomer units other than the hydrophilic monomer unit a, the hydrophobic dicarboxylic acid monomer unit b, and the diol monomer unit as long as the effects of the present embodiment are not impaired.

The method for producing the water-soluble polyester resin is not particularly limited, and a conventionally known method for producing a polyester resin can be applied.

### [Resin having functional group capable of reacting or interacting with water-soluble resin (component B)]

The component B is not particularly limited as long as the component B is a resin having a functional group capable of reacting or interacting with the component A.

Examples of the interaction include an ion-dipole interaction, a dipole-dipole interaction, a π-π interaction, a π-cation interaction, a dipole-induced dipole interaction, an induced dipole-induced dipole interaction, and an interionic interaction.

Examples of the reaction include an esterification reaction, an etherification reaction, a urethanization reaction, an amidation reaction, and a Diels-Alder reaction.

Through the interaction or the reaction, the component B is bonded to the component A, and the component B can be stably dispersed in the matrix of the component A. When this resin is dissolved in water, the component B can be stably dispersed even in water because the component A that is water-soluble exists at the interface of the component B. Thus, when the resin is recovered from water, a state in which the component B is dispersed in the component A matrix can be maintained.

The functional group capable of reacting or interacting with the component A can vary depending on the type of the component A. For example, when the component A is a resin having a carboxy group, a hydroxyl group, or an amino group such as the water-soluble polyester resin and the water-soluble polyamide resin, examples of the functional group capable of reacting or interacting with the carboxy group, the hydroxyl group, or the amino group include at least one selected from the group consisting of an epoxy group, an acid anhydride group, an isocyanate group, an amino group, a carboxyl group, and an oxazoline group, at least one selected from the group consisting of an epoxy group, an acid anhydride, an isocyanate group, an amino group, and a carboxyl group are preferable, and at least one selected from the group consisting of an epoxy group, an acid anhydride, and an isocyanate group are more preferable.

Examples of the component B include Bondfast (registered trademark) 7B and Bondfast 7M (manufactured by Sumitomo Chemical Co., Ltd.); Rotador (registered trademark) AX8840 (manufactured by Arkema Inc.); JONCRYL (registered trademark) ADR4370S, JONCRYL ADR4368CS, JONCRYL ADR4368F, and JONCRYL ADR4300S (manufactured by BASF SE); and ARUFON (registered trademark) UG4035, ARUFON UG4040, and ARUFON UG4070 (manufactured by Toagosei Co., Ltd.). Examples of the reactive compatibilizer having an acid anhydride group include UMEX (registered trademark) 1010 (manufactured by SANYO CHEMICAL INDUSTRIES, LTD.); ADMER (registered trademark) (manufactured by Mitsui Chemicals, Inc.); MODIPER (registered trademark) A8200 (manufactured by NOF CORPORATION); OREVAC (registered trademark) (manufactured by Arkema Inc.); FG1901 and FG1924 (manufactured by KRATON CORPORATION); and Tuftec (registered trademark) M1911, Tuftec M1913, and Tuftec M1943 (manufactured by Asahi Kasei Chemicals Corporation). Examples of the reactive compatibilizer having an isocyanate group include CARBODILITE LA-1 (registered trademark) manufactured by Nisshinbo Chemical Inc.

The content of the component B in the resin composition is preferably 1% by mass or more, more preferably 2% by mass or more, and still more preferably 3% by mass or more, and is preferably 40% by mass or less, more preferably 35% by mass or less, and still more preferably 31% by mass or less from the viewpoint of reproducing the morphology of the resin composition before recycling.

The content of the component B relative to 100 parts by mass of the component A of the resin composition is preferably 1 parts by mass or more, more preferably 2 parts by mass or more, and still more preferably 3 parts by mass or more from the viewpoint of reproducing the morphology of the resin composition before recycling, and is preferably 80 parts by mass or less, more preferably 60 parts by mass or less, and still more preferably 50 parts by mass or less from the same viewpoint.

### [Component C]

The component C is at least one selected from the group consisting of a monovalent inorganic salt and a polycyclic aromatic sulfonate, and among these, at least one selected from the group consisting of an inorganic salt are more preferable from the viewpoint of reproducing the morphology of the resin composition before recycling.

The component C has a solubility in water at 25°C of 1 g/100 g or more, preferably has a solubility in water at 25°C of 10 g/100 g or more, and more preferably has a solubility in water at 25°C of 30 g/100 g or more from the viewpoint of recycling the resin composition from an aqueous solution.

The monovalent inorganic salt is preferably at least one selected from the group consisting of an alkali metal salt, more preferably at least one selected from the group consisting of a halide, a sulfate, a nitrate, a carbonate, a hydrogencarbonate, a borate, a perchlorate, a thiocyanate, and a fluorosulfonate of an alkali metal, still more preferably at least one selected from the group consisting of a halide of an alkali metal, still more preferably at least one selected from the group consisting of a halide of sodium and a halide of potassium, still more preferably at least one selected from the group consisting of sodium chloride and potassium chloride, and still more preferably sodium chloride or potassium chloride from the viewpoint of reproducing the morphology of the resin composition before recycling.

The polycyclic aromatic sulfonate is preferably at least one selected from the group consisting of an alkali metal salt and an alkaline earth metal salt, more preferably at least one selected from the group consisting of an alkali metal salt, still more preferably at least one selected from the group consisting of a naphthalene sulfonate of an alkali metal, and still more preferably sodium naphthalene sulfonate from the same viewpoint.

Examples of the component C include at least one selected from the group consisting of lithium chloride, sodium chloride, potassium chloride, lithium bromide, sodium bromide, potassium bromide, potassium iodide, sodium thiocyanate, potassium thiocyanate, sodium sulfate, sodium nitrate, potassium nitrate, lithium carbonate, sodium carbonate, potassium carbonate, sodium borate, potassium borate, lithium acetate, sodium acetate, potassium acetate, lithium perchlorate, potassium perchlorate, sodium perchlorate, lithium fluorosulfonate, sodium fluorosulfonate, lithium naphthalenesulfonate, sodium naphthalenesulfonate, and potassium naphthalenesulfonate. Among these, from the viewpoint of reproducing the morphology of the resin composition before recycling, sodium chloride or potassium chloride are more preferable.

The content of the component C in the resin composition is preferably 0.01% by mass or more, more preferably 0.03% by mass or more, and still more preferably 0.05% by mass or more, and is preferably 20% by mass or less, more preferably 15% by mass or less, and still more preferably 12% by mass or less from the viewpoint of reproducing the morphology of the resin composition before recycling.

The content of the component C relative to 100 parts by mass of the component A is preferably 0.01 parts by mass or more, more preferably 0.03 parts by mass or more, and still more preferably 0.05 parts by mass or more from the viewpoint of reproducing the morphology of the resin composition before recycling, and is preferably 30 parts by mass or less, more preferably 25 parts by mass or less, and still more preferably 20 parts by mass or less from the same viewpoint.

The resin composition can contain other components as long as the effects of the present invention are not impaired. Examples of the other components include resins other than the component A and the component B, plasticizers such as benzoic acid polyalkylene glycol diester, fillers such as calcium carbonate, magnesium carbonate, glass spheres, graphite, carbon black, carbon fiber, glass fiber, talc, wollastonite, mica, alumina, silica, kaolin, whisker, and silicon carbide, and elastomers.

Examples of the elastomers include an acrylic elastomer, an olefin elastomer, a styrene elastomer, a polyester elastomer, a urethane elastomer, a polyamide elastomer, and a silicone elastomer. Among these, at least one selected from the group consisting of an acrylic elastomer and a styrene elastomer are preferable, and an acrylic elastomer is more preferable. The styrene elastomer is preferably at least one selected from the group consisting of a styrene-butadiene copolymer and a styrene-butadiene-ethylene copolymer. The acrylic elastomer is preferably a methacrylic acid-alkyl acrylate copolymer. Examples of commercially available products of the elastomer include KURARITY (registered trademark) LA2250, KURARITY LA2140, and KURARITY LA4285 (manufactured by KURARAY CO., LTD.). Examples of the olefin elastomer include Kraton (registered trademark) ERS polymer (manufactured by Kraton Corporation); Kraton A polymer and Kraton G polymer (manufactured by Kraton Corporation); "Tuftec H" series and "Tuftec P" series (manufactured by Asahi Kasei Chemicals Corporation); and SEPTON (registered trademark) and HYBRAR (registered trademark) (KURARAY PLASTICS CO., Ltd.).

The content of the elastomer in the resin composition is preferably 0.1% by mass or more, more preferably 1% by mass or more, still more preferably 5% by mass or more, and still more preferably 9% by mass or more from the viewpoint of improving the heat resistance of the resin composition. The content is preferably 30% by mass or less, more preferably 20% by mass or less, and still more preferably 15% by mass or less from the same viewpoint.

The content of the elastomer in the resin composition relative to 100 parts by mass of the component A is preferably 0.01 parts by mass or more, more preferably 0.05 parts by mass or more, and still more preferably 0.06 parts by mass or more from the viewpoint of reproducing the morphology of the resin composition before recycling, and is preferably 100 parts by mass or less, more preferably 60 parts by mass or less, still more preferably 40 parts by mass or less, still more preferably 20 parts by mass or less, and still more preferably 15 parts by mass or less from the same viewpoint.

### <Method for producing resin composition>

The method for producing a resin composition of the present embodiment is a method for producing the resin composition and includes the step of adding the component C. The component C can be added to the component A, can be added to the component B, or can be added to a mixture of the component A and the component B. In this case, the amount of the component C added relative to 100 parts by mass of the component A is preferably 100 parts by mass or more, more preferably 200 parts by mass or more, still more preferably 300 parts by mass or more, and still more preferably 350 parts by mass or more from the viewpoint of reproducing the morphology of the resin composition before recycling, and is preferably 30 parts by mass or less, more preferably 1000 parts by mass or less, still more preferably 700 parts by mass or less, still more preferably 500 parts by mass or less, and still more preferably 450 parts by mass or less from the same viewpoint.

With respect to the above-mentioned embodiments, the present specification further discloses the following composition and method for production.

<1> A resin composition including: a water-soluble resin (component A); a resin having a functional group capable of reacting or interacting with the component A (component B); and at least one selected from the group consisting of a monovalent inorganic salt and a polycyclic aromatic sulfonate (component C).
<2> The resin composition according to <1>, further including an elastomer.
<3> The resin composition according to <1> or <2>, wherein a content of the elastomer in the resin composition is preferably 0.1% by mass or more, more preferably 1% by mass or more, still more preferably 5% by mass or more, and still more preferably 9% by mass or more, and is preferably 30% by mass or less, more preferably 20% by mass or less, and still more preferably 15% by mass or less.
<4> The resin composition according to any one of <1> to <3>, wherein a content of the elastomer in the resin composition relative to 100 parts by mass of the component A is preferably 0.01 parts by mass or more, more preferably 0.05 parts by mass or more, still more preferably 0.06 parts by mass or more, and is preferably 100 parts by mass or less, more preferably 60 parts by mass or less, still more preferably 40 parts by mass or less, still more preferably 20 parts by mass or less, and still more preferably 15 parts by mass or less.
<5> The resin composition according to any one of <1> to <4>, wherein a content of the component B in the resin composition is preferably 1% by mass or more, more preferably 2% by mass or more, still more preferably 3% by mass or more, and is preferably 40% by mass or less, more preferably 35% by mass or less, and still more preferably 31% by mass or less.
<6> The resin composition according to any one of <1> to <5>, wherein a content of the component B relative to 100 parts by mass of the component A of the resin composition is preferably 1 part by mass or more, more preferably 2 parts by mass or more, and still more preferably 3 parts by mass or more, and is preferably 80 parts by mass or less, more preferably 60 parts by mass or less, and still more preferably 50 parts by mass or less.
<7> The resin composition according to any one of <1> to <6>, wherein a content of the component C in the resin composition is preferably 0.01% by mass or more, more preferably 0.03% by mass or more, more preferably 0.05% by mass or more, and is preferably 20% by mass or less, more preferably 15% by mass or less, and still more preferably 12% by mass or less.
<8> The resin composition according to any one of <1> to <7>, wherein a content of the component C relative to 100 parts by mass of the component A is preferably 0.01 parts by mass or more, more preferably 0.03 parts by mass or more, and still more preferably 0.05 parts by mass or more, and is preferably 30 parts by mass or less, more preferably 25 parts by mass or less, and still more preferably 20 parts by mass or less.
<9> The resin composition according to any one of <1> to <8>, wherein a content of the component A in the resin composition is preferably 50% by mass or more, more preferably 60% by mass or more, still more preferably 65% by mass or more, and is preferably 95% by mass or less, more preferably 92% by mass or less, and still more preferably 90% by mass or less.
<10> The resin composition according to any one of <1> to <9>, wherein a weight average molecular weight of the component A is preferably 3,000 or more, more preferably 10,000 or more, still more preferably 13,000 or more, and still more preferably 15,000 or more, and is preferably 70,000 or less, more preferably 50,000 or less, still more preferably 40,000 or less, and still more preferably 30,000 or less.
<11> The resin composition according to any one of <1> to <10>, wherein the component A is preferably one or two selected from the group consisting of a water-soluble polyester resin and a water-soluble polyamide resin, and more preferably a water-soluble polyester resin.
<12> The resin composition according to <11>, wherein the water-soluble polyester resin preferably has a hydrophilic monomer unit a having a hydrophilic group.
<13> The resin composition according to <12>, wherein the hydrophilic group is preferably at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group, more preferably at least one selected from the group consisting of a quaternary ammonium base, an oxyalkylene group, a carboxylate group, a phosphate group, and a sulfonate group, still more preferably at least one selected from the group consisting of a quaternary ammonium base, an oxyalkylene group, and a sulfonate group, and still more preferably a sulfonate group.
<14> The resin composition according to <12> or <13>, wherein a content of the hydrophilic group in the water-soluble polyester resin is preferably 0.5 mmol/g or more, more preferably 0.6 mmol/g or more, and still more preferably 0.7 mmol/g or more, and preferably 3 mmol/g or less, more preferably 2 mmol/g or less, and still more preferably 1.5 mmol/g or less.
<15> The resin composition according to <12> to <14>, wherein a percentage of the amount of substance of the hydrophilic monomer unit a based on the total amount of substance of all monomer units in the water-soluble polyester resin is preferably 1 mol% or more, more preferably 7 mol% or more, still more preferably 10 mol% or more, and still more preferably 12 mol% or more, is preferably 45 mol% or less, more preferably 40 mol% or less, still more preferably 35 mol% or less, and is preferably 1 to 45 mol%, more preferably 7 to 45 mol%, still more preferably 10 to 40 mol%, and still more preferably 12 to 35 mol%.
<16> The resin composition according to any one of <12> to <15>, wherein a monomer a from which the hydrophilic monomer unit a is derived is preferably at least one selected from the group consisting of a carboxylic acid, an amine, and an amino acid, more preferably a carboxylic acid, preferably an aromatic carboxylic acid, more preferably at least one selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, preferably at least one selected from the group consisting of 5-hydroxyisophthalic acid, 5-aminoisophthalic acid, 5-sulfoisophthalic acid, 2-sulfoterephthalic acid, and 4-sulfo-2,6-naphthalenedicarboxylic acid, more preferably one or two selected from the group consisting of 5-sulfoisophthalic acid and 2-sulfoterephthalic acid, and still more preferably 5-sulfoisophthalic acid.
<17> The resin composition according to any one of <12> to <16>, wherein the water-soluble polyester resin has a hydrophobic dicarboxylic acid monomer unit b and a diol monomer unit.
<18> The resin composition according to <17>, wherein a dicarboxylic acid b from which the hydrophobic dicarboxylic acid monomer unit b is derived is preferably at least one selected from the group consisting of an aromatic dicarboxylic acid, an aliphatic dicarboxylic acid, and an alicyclic dicarboxylic acid, more preferably at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantane dicarboxylic acid, still more preferably at least one selected from the group consisting of terephthalic acid, 2,5-furandicarboxylic acid, and 2,6-naphthalenedicarboxylic acid, and still more preferably 2,6-naphthalenedicarboxylic acid.
<19> The resin composition according to <17> or <18>, wherein a percentage of the amount of substance of the hydrophobic dicarboxylic acid monomer unit b in the water-soluble polyester resin based on the total amount of substance of all monomer units in the water-soluble polyester resin is preferably 15 mol% or more, more preferably 25 mol% or more, and still more preferably 30 mol% or more, is preferably 45 mol% or less, more preferably 42 mol% or less, still more preferably 40 mol% or less, and is preferably 15 to 45 mol%, more preferably 25 to 42 mol%, and still more preferably 30 to 40 mol%.
<20> The resin composition according to any one of <17> to <19>, wherein a molar ratio of the hydrophilic monomer unit a to the hydrophobic dicarboxylic acid monomer unit b in the water-soluble polyester resin (the hydrophilic monomer unit a/the hydrophobic dicarboxylic acid monomer unit b) is preferably 10/90 or more, more preferably 15/85 or more, still more preferably 18/82 or more, and still more preferably 20/80 or more, and is preferably 70/30 or less, more preferably 65/35 or less, and still more preferably 60/40 or less.
<21> The resin composition according to any one of <17> to <20>, wherein a diol c from which the diol monomer unit is derived is preferably an aliphatic diol or an aromatic diol, and more preferably an aliphatic diol.
<22> The resin composition according to <21>, wherein the diol c is preferably at least one selected from the group consisting of ethylene glycol, 1,2-propanediol, diethylene glycol, 1,3-propanediol, dipropylene glycol, 1,4-cyclohexanedimethanol, hydrogenated bisphenol A, isosorbide, bisphenoxyethanolfluorene, bisphenol fluorene, biscresoxyethanolfluorene, and biscresol fluorene, and more preferably one or two selected from the group consisting of ethylene glycol and bisphenoxyethanolfluorene.
<23> A method for producing the resin composition according to any one of <1> to <22>, including the step of:
   adding at least one selected from the group consisting of a monovalent inorganic salt and a polycyclic aromatic sulfonate (component C).

### EXAMPLES

The pressure is expressed in an absolute pressure. "Normal pressure" refers to 101.3 kPa.

### [Analysis method]

### [Molecular weight of water-soluble resin]

A calibration curve was prepared from standard polystyrene using a gel permeation chromatograph (GPC) method under the following conditions to determine the weight average molecular weight (Mw).

### (Measurement condition)

- Apparatus: HLC-8320 GPC (Detector integrated type, manufactured by TOSOH CORPORATION)
- Column: α-M × 2 columns (7.8 mmI.D. × 30 cm, manufactured by TOSOH CORPORATION)
- Eluent: 60 mmol/L phosphoric acid + 50 mmol/L lithium brominate/dimethylformamide solution
- Flow rate: 1.0 ml/min
- Column temperature: 40°C
- Detector: RI detector
- Standard substance: polystyrene

### [Synthesis of water-soluble polyester resin A1]

Into a 2 L stainless steel separable flask (with a K tube, a stirrer, a nitrogen inlet tube), 244 g of dimethyl 2,6-naphthalenedicarboxylate (manufactured by Tokyo Chemical Industry Co., Ltd.), 216 g of ethylene glycol (manufactured by FUJIFILM Wako Pure Chemical Corporation), 101 g of dimethyl sodium 5-sulfoisophthalate (manufactured by SANYO CHEMICAL INDUSTRIES, LTD.), 57 mg of titanium tetrabutoxide (manufactured by Tokyo Chemical Industry Co., Ltd.), and 211 mg of anhydrous sodium acetate (manufactured by FUJIFILM Wako Pure Chemical Corporation) were charged, the surface temperature of a mantle heater was raised to 235°C with the mantle heater under normal pressure and a nitrogen atmosphere with stirring, and then the mixture was stirred at 235°C for 6.2 hours to perform a transesterification reaction. Subsequently, the surface temperature of the heater was raised to 270°C, and then polycondensation was performed for 2 hours with stirring while maintaining the temperature at 270°C, and at the same time reducing the pressure to 4.9 kPa. Nitrogen was charged into the stainless steel separable flask, and the pressure was returned to normal pressure to obtain a slightly yellow transparent (room temperature) water-soluble polyester resin A1. The weight average molecular weight (in terms of polystyrene) measured by GPC was 17,800. The content of the sulfonate group in the water-soluble polyester resin A1 calculated from the charged amount of the raw materials was 1.0 mmol/g. The amount of substance of the monomer unit having a sulfonate group based on all the monomer units in the water-soluble polyester resin A1 calculated from the charged amount of the raw materials was 12.5 mol%.

### [Production of resin composition 1-1]

To Labo Plastomill (Labo Plastmill 4C150 manufactured by Toyo Seiki Seisaku-sho, Ltd.), 42.6 g of the water-soluble polyester resin A1 obtained above as a component A, 5.3 g of KURARITY LA2250 (manufactured by KURARAY CO., LTD.) as an elastomer and 2.1 g of Bondfast 7B (manufactured by Sumitomo Chemical Co., Ltd.) as a component B were each placed, and melt-kneaded under the condition of 230°C/90 rpm/10 minutes to obtain a resin composition 1-1. This resin composition 1-1 was used as the resin composition according to Comparative Example 1.

### [Production of resin composition 1-2]

To Labo Plastomill, 100 parts by mass of the water-soluble polyester resin A1 obtained above as a component A and 12.5 parts by mass of Tuftec M1913 (manufactured by Asahi Kasei Corporation) as a component B were each placed, and melt-kneaded under the condition of 230°C/90 rpm/10 minutes to obtain a resin composition 1-2. This resin composition was used as the resin composition according to Comparative Example 3.

### [Synthesis of water-soluble polyester resin A2]

Into a 2 L stainless steel separable flask (with a K tube, a stirrer, a nitrogen inlet tube), 47.4 parts by mass of dimethyl 2,6-naphthalenedicarboxylate (manufactured by Tokyo Chemical Industry Co., Ltd.), 104.2 parts by mass of dimethyl sodium 5-sulfoisophthalate (manufactured by SANYO CHEMICAL INDUSTRIES, LTD.), 44.7 parts by mass of ethylene glycol (manufactured by FUJIFILM Wako Pure Chemical Corporation), 0.052 parts by mass of titanium tetrabutoxide (manufactured by Tokyo Chemical Industry Co., Ltd.), 234.6 parts by mass of bisphenoxyethanolfluorene (manufactured by Osaka Gas Chemicals Co., Ltd.), and 1.73 parts by mass of anhydrous sodium acetate (manufactured by FUJIFILM Wako Pure Chemical Corporation) were charged, the temperature of the surface of a mantle heater was raised from 160°C to 260°C over 1 hour with the mantle heater with stirring under normal pressure and a nitrogen atmosphere, and then the mixture was stirred for 6 hours and 30 minutes while maintaining the temperature at 260°C to perform a transesterification reaction. Then, 17.6 parts by mass of tetrabutylphosphonium dodecylbenzenesulfonate (manufactured by TAKEMOTO OIL & FAT Co., Ltd.: ELECUT S-418) was added, the temperature of the surface of the heater was raised from 260°C to 290°C over 40 minutes, and then the mixture was stirred for 1 hour while maintaining the temperature at 290°C. Then, the pressure was reduced from normal pressure to 2 kPa, the temperature of the surface of the heater was raised from 290°C to 315°C over 35 minutes. Then, the temperature was raised to 325°C while reducing the pressure from 2 kPa to 145 Pa. Then, the mixture was stirred for 3 hours while maintaining the temperature at 325°C and the pressure at 145 Pa to perform a reaction. Nitrogen was charged into the stainless steel separable flask, and the pressure was returned to normal pressure to obtain a water-soluble polyester resin A2. The weight average molecular weight (in terms of polystyrene) measured by GPC was 29,400. The content of the sulfonate group in the water-soluble polyester resin A2 calculated from the charged amount of the raw materials was 0.99 mmol/g. The amount of substance of the monomer unit having a sulfonate group based on all the monomer units in the water-soluble polyester resin A2 calculated from the charged amount of the raw materials was 32.2 mol%.

### [Production of resin composition 2-1]

To Labo Plastomill, 110 parts by mass of the water-soluble polyester resin A2 obtained above as a component A and 50 parts by mass of Bondfast CG5001 (manufactured by Sumitomo Chemical Co., Ltd.) as a component B were placed, and melt-kneaded at 300°C and 90 r/min for 10 minutes to obtain a resin composition C which is a brown mixture.

This resin composition was used as the resin composition according to Comparative Example 4.

### [Production of resin composition according to Example 1 and Comparative Example 2]

To 95 parts by mass of deionized water, 5 parts by mass of the resin composition 1-1 was placed so as to be 5% by mass, and the mixture was stirred at 70°C for 30 minutes to prepare an aqueous resin composition 1-1 solution in which the water-soluble polyester resin A1 was dissolved. To this, the salt described in Table 1 as a component C was added in the amount relative to the component A described in Table 1 to produce a precipitate. The aqueous solution containing the precipitate was stirred for 5 minutes. Then, stirring was stopped, and the obtained deposit was collected by filtering, washed with 100 parts by mass of deionized water, and then the deposit was dried at 60°C under reduced pressure for 12 hours or more to obtain evaluation samples of Example 1 and Comparative Example 2. The content of the salt of the evaluation samples was determined by measuring the concentration of chlorine ions not contained in the water-soluble polyester resin A1 and the composite thereof (combustion-coulometric titration method), and calculating the amount of sodium chloride or the amount of calcium chloride from the measured value. The evaluation results are shown in Table 1.

### [Production of resin composition according to Example 2]

An evaluation sample of Example 2 was obtained by performing the same procedure as in Example 1 except that the deposit was not washed with 100 parts by mass of deionized water after filtration. The content of sodium chloride in the evaluation sample was determined by performing measurement and calculation in the same manner as in Example 1.

### [Production of resin composition according to Example 3]

An evaluation sample of Example 3 was obtained by performing the same procedure as in Example 1 except that the resin composition 1-1 was changed to the resin composition 1-2. The content of sodium chloride in the evaluation sample was determined by performing measurement and calculation in the same manner as in Example 1.

### [Production of resin composition according to Example 4]

An evaluation sample of Example 4 was obtained by performing the same procedure as in Example 1 except that 5 parts by mass of the resin composition 2-1 was added to 95 parts by mass of a 10% by mass aqueous solution of n-butyl diglycol (manufactured by FUJIFILM Wako Pure Chemical Corporation), the mixture was stirred at 90°C for 30 minutes to prepare a resin composition 2-1 solution in which the water-soluble polyester resin A2 was dissolved, and the salt shown in Table 1 was added. The content of potassium chloride in the evaluation sample was determined by performing measurement and calculation in the same manner as in Example 1.

### [Evaluation of morphology]

Examples 1 and 2 and Comparative Examples 1 and 2 Each evaluation sample of Examples 1 and 2 and Comparative Examples 1 and 2 was pressed at 230°C so that the thickness would be 0.4 mm to prepare a press sheet. The prepared press sheet was immersed in liquid nitrogen to be cooled, and then fractured to expose a fracture surface. The sample was each immersed in ethyl acetate, and irradiated with ultrasonic waves for 1 hour to elute the component B that did not react with the component A and the elastomer. The press sheet from which the elastomer had been eluted was dried, and the fracture surface was observed with a scanning electron microscope (VE-8800 manufactured by KEYENCE CORPORATION). On the fracture surfaces according to Comparative Example 1 and Examples 1 and 2, a spherical disperse phase that was presumably produced by elution of the elastomer was observed. The diameter of the disperse phase was measured at 50 or more points from the SEM image, and the average was calculated to evaluate the morphology. The evaluation results are shown in Table 1.

Examples 3 and 4 and Comparative Examples 3 and 4 The morphology of the evaluation sample was evaluated in the same procedure as in Example 1 except that cyclohexane was used instead of ethyl acetate to elute the component B that did not react with the component A. The evaluation results are shown in Table 1.

Salts as the component C used in Table 1 are shown below.
- Sodium chloride (manufactured by FUJIFILM Wako Pure Chemical Corporation)
- Calcium chloride (manufactured by FUJIFILM Wako Pure Chemical Corporation)
- Potassium chloride (manufactured by FUJIFILM Wako Pure Chemical Corporation)

**[Table 1]**

| | Component A | Component B | Salt | | | Shape of disperse phase | Average diameter of disperse phase (µm) |
|---|---|---|---|---|---|---|---|
| | | | Component C | Amount added (parts by mass relative to 100 parts by mass of component A) | Content (parts by mass relative to 100 parts by mass of component A) | | |
| Example 1 | A1 | Bondfast7B | Sodium chloride | 470 | 0.071 | Spherical | 1.1 |
| Example 2 | A1 | Bondfast7B | Sodium chloride | 470 | 15 | Spherical | 1.0 |
| Example 3 | A1 | Tuftec M1913 | Sodium chloride | 450 | 1.0 | Spherical | 0.28 |
| Example 4 | A2 | BondfastCG5001 | Potassium chloride | 640 | 3.0 | Spherical | 0.27 |
| Comparative Example 1 | A1 | Bondfast7B | None | 0 | 0 | Spherical | 1.2 |
| Comparative Example 2 | A1 | Bondfast7B | Calcium chloride | 118 | 1.4 | Indefinite | Unevaluable due to indefinite shape |
| Comparative Example 3 | A1 | Tuftec M1913 | None | 0 | 0 | Spherical | 0.26 |
| Comparative Example 4 | A2 | BondfastCG5001 | None | 0 | 0 | Spherical | 0.29 |

## Claims

1. A resin composition, comprising:
a water-soluble resin (component A);
a resin having a functional group capable of reacting or interacting with the component A (component B); and
at least one selected from the group consisting of a monovalent inorganic salt and a polycyclic aromatic sulfonate (component C).

2. The resin composition according to claim 1, further comprising an elastomer.

3. The resin composition according to claim 2,
wherein a content of the elastomer of the resin composition relative to 100 parts by mass of the component A is 0.01 parts by mass or more and 100 parts by mass or less.

4. The resin composition according to any one of claims 1 to 3, wherein a content of the component B relative to 100 parts by mass of the component A is 1 part by mass or more and 20 parts by mass or less.

5. The resin composition according to any one of claims 1 to 4, wherein a content of the component C relative to 100 parts by mass of the component A is 0.01 parts by mass or more and 30 parts by mass or less.

6. The resin composition according to any one of claims 1 to 5, wherein a content of the component A is 50% by mass or more and 95% by mass or less.

7. The resin composition according to any one of claims 1 to 6, wherein a content of the component B is 1% by mass or more and 40% by mass or less.

8. The resin composition according to any one of claims 1 to 7, wherein a content of the component C is 0.01% by mass or more and 20% by mass or less.

9. The resin composition according to any one of claims 1 to 8, wherein a weight average molecular weight of the component A is 3,000 or more and 70,000 or less.

10. The resin composition according to any one of claims 1 to 9, wherein the component A is a water-soluble polyester resin.

11. The resin composition according to claim 10,
wherein the water-soluble polyester resin has a hydrophilic monomer unit a having a hydrophilic group.

12. The resin composition according to claim 11, wherein the hydrophilic group is a sulfonate group.

13. The resin composition according to claim 11 or 12, wherein a content of the hydrophilic group in the water-soluble polyester resin is 0.5 mmol/g or more and 3.0 mmol/g or less.

14. The resin composition according to any one of claims 11 to 13, wherein a monomer from which the hydrophilic monomer unit a is derived is an aromatic dicarboxylic acid.

15. The resin composition according to claim 14, wherein the aromatic dicarboxylic acid is 5-sulfoisophthalic acid.

16. The resin composition according to any one of claims 10 to 15, wherein the water-soluble polyester resin has a hydrophobic dicarboxylic acid monomer unit b and a diol monomer unit.

17. The resin composition according to claim 16, wherein a monomer from which the hydrophobic dicarboxylic acid monomer unit b is derived is 2,6-naphthalenedicarboxylic acid.

18. The resin composition according to claim 16 or 17, wherein a diol from which the diol monomer unit is derived is an aliphatic diol.

19. The resin composition according to claim 18, wherein the aliphatic diol is at least one selected from the group consisting of ethylene glycol and bisphenoxyethanolfluorene.

20. A method for producing the resin composition according to any one of claims 1 to 19, comprising the step of:
adding at least one selected from the group consisting of a monovalent inorganic salt and a polycyclic aromatic sulfonate (component C).
